# EUROPEAN PATENT SPECIFICATION

(11) **EP 0 825 510 B1**
(45) Date of publication and mention of the grant of the patent: **03.11.1999**
(21) Application number: 96830452.7
(22) Date of filing: 19.08.1996
(51) Int. Cl.: G05D 23/00, G05D 23/13, F01P 7/16

(54) **Thermostatic valve assembly**
Thermostatventilaufbau
Montage de vanne thermostatique

(43) Date of publication of application: 25.02.1998
(73) Proprietor: Behr Thermot-tronik Italia S.p.A., 10123 Torino (IT)
(72) Inventor: Triberti, Franco, 10024 Moncalieri (IT)
(74) Representative: Buzzi, Franco

(56) References cited:
- EP-A- 0 600 150
- GB-A- 1 429 380

## Description

The present invention is generally related to a thermostatic valve assembly, of the type intended for instance to be employed for controlling the flow of the coolant liquid in an internal combustion engine for motor vehicles.

More particularly, the invention is directed to a thermostatic valve assembly including a pipe union formed with an annular valve seat, a hollow body formed with a tubular passage connected to the pipe union, and a valve unit controlling communication between said tubular passage of the hollow body and said pipe union and including a thermostatic element formed by a housing containing a heat-expansible material, a stem reacting against a bearing formed in said pipe union and onto which said housing is telescopically slidably coupled, a disk valve obturator axially fixed to the housing and cooperating with the annular seat valve of the pipe union, and a resilient thrust member axially interposed between the valve obturator and a transverse support member across which said housing is axially slidably guided.

In the current manufacturing a valve assemblies of the above-referenced type, the pipe union is conveniently made of moulded plastic material, preferably of high-resistance technopolymers, while the hollow body is normally - but not necessarily - made of metal, for instance of die-cast aluminium.

In such valve assemblies a retaining system must be provided for the transverse support member of the thermostatic element, acting as a guiding support for the housing carrying the disk obturator, and also as a reaction element for the related thrust spring.

In known solutions according to EP-A-0600150 or GB-A-1429380, the transverse support member of the thermostatic element has its opposite ends axially engaged, under the action of the resilient thrust member, onto respective bearing parts which are formed in integral legs of said pipe union and axially projecting within the tubular passage of the hollow body. More particularly, in EP-A-0600150 the ends of the transverse support member are substantially U bent, and are provided with respective terminal anchoring teeth engaging corresponding anchoring seats of said integral legs of the pipe union.

This solution may lead to a critical inconvenience in case, exactly according to the current manufacturing trend, the pipe union is made of moulded plastic material. In fact in this case the integral legs of the pipe union are in use hugely loaded under tensile stress, due to the action of the resilient thrust member, which may cause breakage thereof even after a short operation time. These breakages, further to involve inoperativeness of the thermostatic valve assembly with the consequences which can derive thereby, may produce introduction of solid fragments into the fluid circulating through the valve assembly, with the risk of further failures and damages of other components (pumps and the like) of the circuit.

The object of the present invention is to overcome the above drawback in a simple, practical and economical way, even in connection with manufacturing and assembling the valve assembly, additionally enabling less valuable plastic material to be employed for the manufacturing of the pipe union.

A further object of the invention is to provide a valve assembly of the type set forth in the above which is adapted to ensure, in use, a higher reliability and safety degree even following a long operation time.

According to the invention, these objects are achieved by virtue of a thermostatic valve assembly such as defined in the preamble of claim 1, the main feature of which resides in that said bearing parts are constituted by inner projections integrally formed with the hollow body at opposite locations of said tubular passage.

This idea of solution allows, in a simple and economical way, to overcome the above mentioned inconveniences related to the prior art. This advantageous effect can be obtained both in case the hollow body is made of metal, and in the case same is also made of moulded plastic material.

According to a preferred embodiment of the invention, the ends of the transverse support member and said inner projections of the hollow body perform mutual angularly locked couplings.

Conveniently these inner projections are substantially step shaped and the ends of the transverse support member are formed as brackets engaged astride of said step shaped inner projections.

The invention will now be disclosed in detail with reference to the accompanying drawings, purely provided by way of non-limiting example in which:

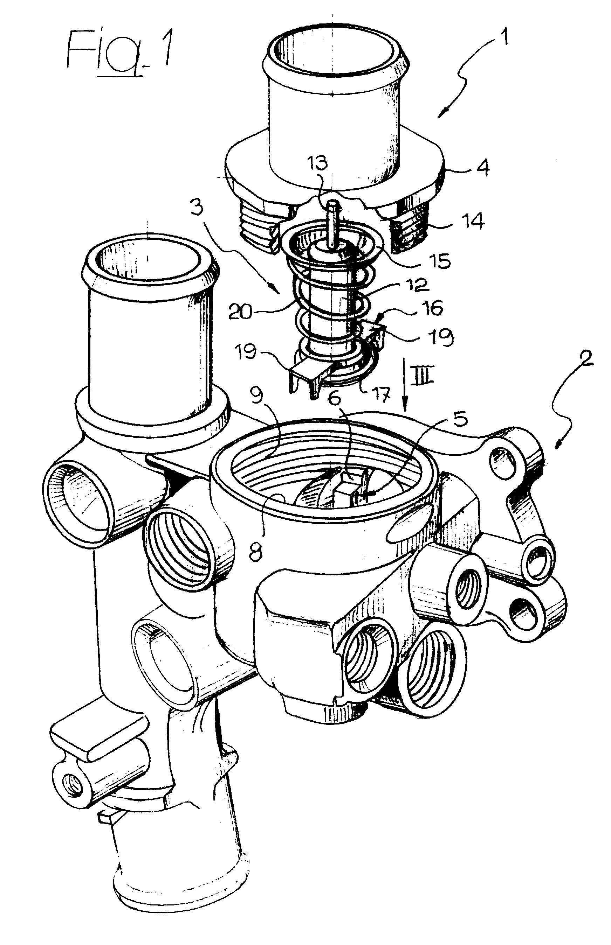

figure 1 is a perspective exploded view diagrammatically showing a thermostatic valve assembly according to the invention,

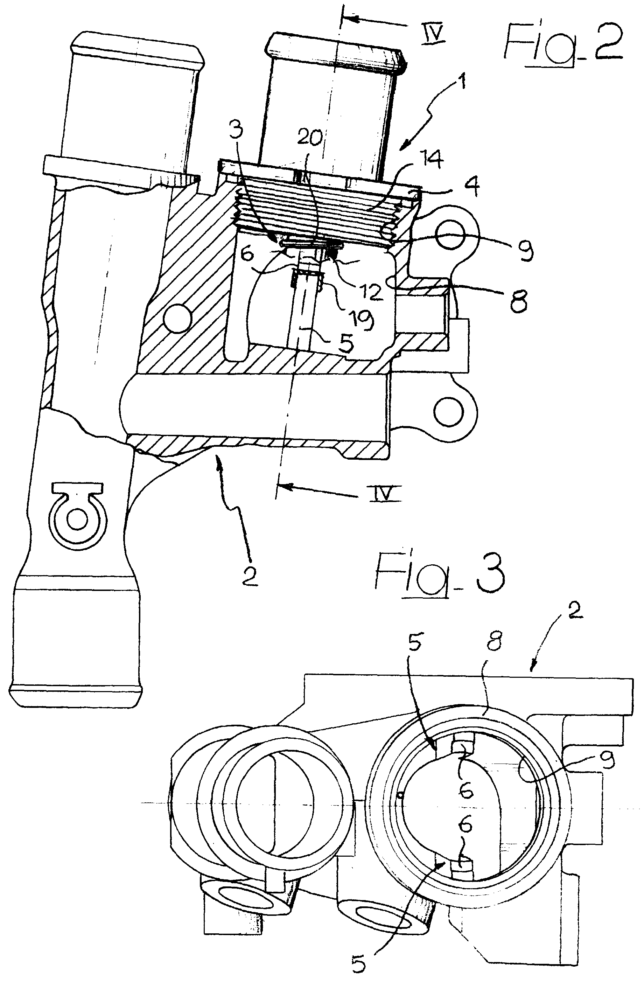

figure 2 is a partially axially sectioned view of the valve assembly of figure 1,

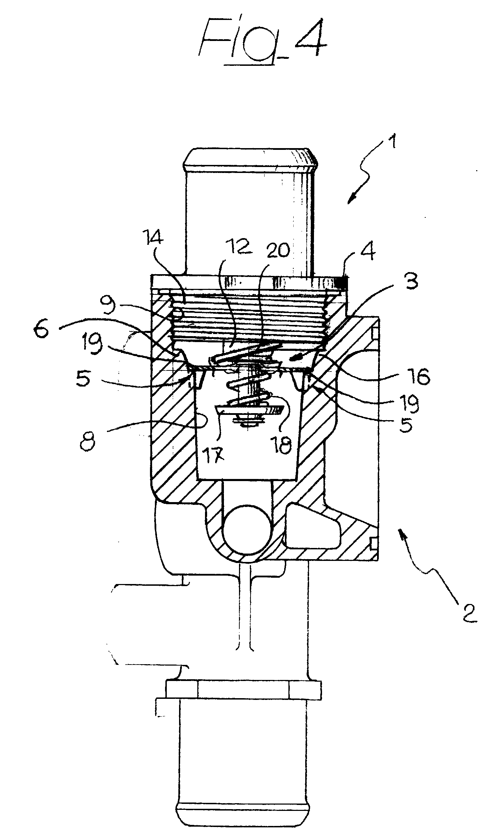

figure 3 is a top plan view according to arrow III of figure 1, and
figure 4 is a sectioned view according to line IV-IV of figure 2.

Referring to the drawings, a thermostatic valve assembly according to the invention essentially comprises a pipe union or connector 1 made of moulded plastic material (for instance glass-reinforced polyamide resin "66"), a hollow body 2 normally made of die-cast aluminium (or even made of high-resistance moulded plastic material), and a thermostatic valve unit generally designated as 3.

The pipe union 1 is provided with an enlarged base portion 4, having a circular shape, having an outerly threaded tubular appendage 14 within which an annular valve seat, not depicted in the drawings, is conventionally formed.

The hollow body 2 such as depicted in the drawings is purely indicative, since it may have any different configuration. Generally, the body 2 is provided with inlet-outlet passages for circulation of a liquid, for instance the coolant of an internal combustion engine, and is thus conventionally designed for its connection to the circuit of that fluid.

In connection with the present invention, it is sufficient that the body 2 be formed with a tubular passage 8 having an inner threading 9 for axial coupling thereof with the outerly threaded appendage 14 of the pipe union 1. As an alternative, coupling between the pipe union 1 and the hollow body 2 could be performed through a bayonet-type connection or equivalent systems.

According to the fundamental feature of the invention, the tubular passage 8 of the hollow body 2 is formed with a pair of diametrically opposed inner axial projections 5, whose function shall be clarified herebelow, which are projecting towards the interior of the tubular passage 8 immediately below the inner threading 9 thereof. The two axial projections 5 are integrally formed upon die-casting or moulding of the hollow body 2, respectively, in the case same is made of aluminium or of plastic material. These axial projections 5 have in the shown example respective step-like shaped ends 6: however this configuration is not to be considered in a limiting way.

The valve unit 3 is of a generally conventional type, and substantially corresponds from both the structural and the functional point of view to the one disclosed in already mentioned document EP-A-0600150. As far as the present invention is concerned, it is sufficient to clarify that the valve unit 3 comprises a cylindrical housing 12 containing a heat-expansible material (for instance wax), and a stem 13 reacting axially against a front bearing 14, integrally formed inside the pipe union 1, and on which the housing 12 is slidably coupled telescopically. A disk valve obturator 15 is axially fixed to the housing 12, which is adapted to cooperate with the annular valve seat formed within the base 4 of the pipe union 1. This disk obturator 15 is subjected to the axial thrust of a helical compression spring 12 interposed between the valve obturator 15 and a transverse support member 16, across which the housing 12 is slidably guided axially.

The thermostatic element 3 can be further provided with a second disk obturator 17 and associated thrust spring 18, arranged on the side opposite to the disk obturator 15.

The transverse support member 16 has bracket-like shaped opposite ends 19 which, in the assembled condition of the valve assembly following threaded engagement of the pipe union 1 within the tubular passage 8 of the hollow body 2, are fitted astride of the step shaped ends 6 of the support projections 5, so as to keep the thrust spring 20 in a pre-compressed condition. In this condition, the bracket shaped ends 19 of the transverse support member 16 are thus bearing onto the projections 5, providing a steady and angularly locked coupling of the transverse support member 16 relative to the tubular passage 8, under the bias of the spring 20.

The free end of the stem 13 is engaged with the front bearing 14 of the pipe union 1, and the disk obturator 15 is normally closed against the annular valve seat of the base 4.

In operation, when the temperature within the tubular passage 8 reaches a pre-determined value, the heat-sensitive material contained within the housing 12 expands, thus causing axial displacement of the latter in the direction opposite to the pipe union 1, and consequent separation of the disk obturator 15 relative to the valve seat, against the action of the spring 20. The flow path between the pipe union 1 and the hollow body 2 is thus opened.

The provision of the projections 5 engaged by the ends 19 of the transverse support member 16 enables to substantially avoid the risk of breakage of the pipe union 1, since same is not subjected to tensile stresses applied by the thrust spring 20, which is directly reacting against the hollow body 2. This allows employing a less resistant and thus less valuable and cheaper plastic material for the manufacturing of the pipe union 1.

Naturally the details of construction and the embodiments may be widely varied with respect to what has been disclosed and illustrated, without thereby departing from the scope of the present invention, such as defined in the appended claims. Thus, for instance, the stepped design of the ends 6 of the support projections 5 and the bracket design 21 of the ends 19 of the transverse support members 16 could be reversed, or anyway different, provided that a firm mutual coupling therebetween is ensured.

## Claims

1. A thermostatic valve assembly including a pipe union (1) formed with an annular valve seat (4), a hollow body (2) formed with a tubular passage (8) connected to said pipe union (1), and a valve unit controlling communication between said tubular passage (8) of the hollow body (2) and said pipe union (1) and including a thermostatic element (3) formed by a housing (12) containing a heat-expansible material, a stem (13) reacting against a bearing (14) formed in said pipe union (1) and onto which said housing (12) is telescopically slidably coupled, a disk valve obturator (15) axially fixed to the housing (12) and cooperating with said annular valve seat (4) of the pipe union (1), and a resilient thrust member (20) axially interposed between said valve obturator (15) and a transverse support member (16) across which said housing (12) is axially slidably guided, wherein said transverse support member (16) has opposite ends (19) axially engaged, under the action of said resilient thrust member (20), onto respective bearing parts (5), characterised in that said bearing parts are constituted by inner projections (5) integrally formed with the hollow body (2) at opposite locations of said tubular passage (8).

2. Thermostatic valve assembly according to claim 1, characterised in that said ends (19) of the transverse support member (16) and said inner projections (5) of the hollow body (2) perform mutual angularly locked couplings.

3. Thermostatic valve assembly according to claim 2, characterised in that said inner projections (5) are substantially step shaped (6) and said ends (19) of the transverse support member (16) are formed as brackets engaged astride of said step shaped (6) inner projections (5).

4. Thermostatic valve assembly according to any of the preceding claims, characterised in that said pipe union (1) and said hollow body (2) are connected to each other through threaded coupling means (14, 9).

5. Thermostatic valve assembly according to any of the preceding claims, characterised in that said pipe union (1) is made of moulded plastic material.

## Patentansprüche

1. Thermostatventilaufbau aufweisend ein mit einem Ringventilsitz (4) ausgebildetes Rohrverbindungsstück (1), einen Hohlkörper (2), der mit einem an das Rohrverbindungstück (1) angeschlossenen rohrförmigen Durchgang (8) ausgebildet ist, und eine Ventileinheit, die die Verbindung zwischen dem rohrförmigen Durchgang (8) des Hohlkörpers (2) und dem Rohrverbindungsstück (1) steuert und ein thermostatisches Element (3) aufweist, das durch ein ein wärmeexpansionsfähiges Material enthaltendes Gehäuse (12) gebildet ist, einen Stößel (13), der einem in dem Rohrverbindungsstück (1) ausgebildeten Lager (14) entgegenwirkt und auf dem das Gehäuse (12) teleskopisch verschiebbar befestigt ist, eine Plattenventil-Verschlußvorrichtung (15), die axial an dem Gehäuse (12) befestigt ist und mit dem Ringventilsitz (4) des Rohrverbindungsstücks (1) zusammenwirkt, und ein Federdruckelement (20), das axial zwischen der Ventilschließvorrichtung (15) und einem Querträgerelement (16) angeordnet ist, über das das Gehäuse (12) axial verschiebbar geführt ist, wobei das Querträgerelement (16) gegenüberliegende Enden (19) aufweist, die unter Einfluß des Federdruckelementes (20) axial an jeweiligen Lagerteilen (5) angreifen,
dadurch gekennzeichnet, daß
die Lagerteile durch innere Vorsprünge (5) gebildet sind, die an gegenüberliegenden Stellen des rohrförmigen Durchgangs (8) einstückig mit dem Hohlkörper (2) ausgebildet sind.

2. Thermostatventilaufbau gemäß Anspruch 1, dadurch gekennzeichnet, daß die Enden (19) des Querträgerelementes (16) und die inneren Vorsprünge (5) des Hohlkörpers (2) Gegenwinkel-Verriegelungskupplungen bilden.

3. Thermostatventilaufbau gemäß Anspruch 2, dadurch gekennzeichnet, daß die inneren Vorsprünge (5) im wesentlichen stufenförmig (6) sind und die Enden (19) des Querträgerelementes (16) als Bügel ausgebildet sind, die rittlings auf den stufenförmigen (6) inneren Vorsprüngen (5) eingespreizt sind.

4. Thermostatventilaufbau gemäß einem der vorhergehenden Ansprüche, dadurch gekennzeichnet, daß das Rohrverbindungsstück (1) und der Hohlkörper (2) durch Gewindeverbindungsmittel (14, 9) miteinander verbunden sind.

5. Thermostatventilaufbau gemäß einem der vorhergehenden Ansprüche, dadurch gekennzeichnet, daß das Rohrverbindungsstück (1) aus geformtem Kunststoffmaterial hergestellt ist.

## Revendications

1. Ensemble formant vanne thermostatique comportant un raccord de conduite (1) formé avec un siège de vanne annulaire (4), un corps creux (2) formé avec un passage tubulaire (8), relié audit raccord de conduite (1), et un organe formant vanne commandant la communication entre ledit passage tubulaire (8) du corps creux (2) et ledit raccord de conduite (1) et comprenant un élément thermostatique (3) formé par une enceinte (12) contenant un matériau thermiquement dilatable, une tige (13) réagissant contre une portée (14) formée dans ledit raccord de conduite (1) et sur laquelle ladite enceinte (12) est couplée avec liberté de coulisser télescopiquement, un obturateur de vanne en forme de disque (15) axialement fixé à l'enceinte (12) et coopérant avec ledit siège de vanne annulaire (4) du raccord de conduite (1), et un élément de poussée élastique (20) axialement interposé entre ledit obturateur de vanne (15) et un élément support transversal (16) en travers duquel ladite enceinte (12) est guidée avec liberté de coulisser axialement, ensemble dans lequel ledit élément support transversal (16) a des extrémités opposées (19) venant axialement en prise, sous l'action dudit élément de poussée élastique (20), sur des parties formant portée respective (5), caractérisé par le fait que lesdites parties formant portée sont constituées par des saillies intérieures (5) solidairement formées avec le corps creux (2) en des positions opposées dudit passage tubulaire (8).

2. Ensemble formant vanne thermostatique selon la revendication 1, caractérisé par le fait que lesdites extrémités (19) de l'élément support transversal (16) et lesdites saillies intérieures (5) du corps creux (2) assurent un couplage mutuel à verrouillage angulaire.

3. Ensemble formant vanne thermostatique selon la revendication 2, caractérisé par le fait que lesdites saillies intérieures (5) sont substantiellement en forme de marche (6) et que lesdites extrémités (19) de l'élément support transversal (16) ont la forme de crochets venant en prise à califourchon sur lesdites saillies intérieures (5) en forme de marche.

4. Ensemble formant vanne thermostatique selon l'une quelconque des revendications précédentes, caractérisé par le fait que ledit raccord de conduite (1) et ledit corps creux (2) sont reliés l'un à l'autre par des moyens de couplage filetés (14, 9).

5. Ensemble formant vanne thermostatique selon l'une quelconque des revendications précédentes, caractérisé par le fait que ledit raccord de conduite (1) est fait d'un matériau plastique moulé.
